# EUROPEAN PATENT APPLICATION

(11) **EP 3 480 871 A1**
(43) Date of publication of application: **08.05.2019**
(21) Application number: 18211370.4
(22) Date of filing: 09.10.2015
(51) Int. Cl.: H01M 4/04, H01M 4/16, H01M 4/76, H01M 10/06

(54) **MULTITUBULAR GAUNTLET FOR LEAD-ACID BATTERIES**

(62) Divisional of application: 15189220.5
(71) Applicant: Mecondor S.A., 4780 Sankt Vith (BE)
(72) Inventor: FRANZEN, Günter, 4761 Büllingen (BE)
(74) Representative: Pronovem

(57) **Abstract**

The present invention is related to a multitubular gauntlet for lead-acid batteries comprising at least one sheet of fabric of a porous material folded on both edges and seamed along parallel lines and forming a plurality of parallel tubes, wherein the lateral tubes form the edge of said gauntlet and wherein both edges of said gauntlet are free of lateral finish.

## Description

### Field of the Invention

The invention is related to multitubular bags for electrodes of lead-acid batteries, in particular for multitubular bags free of lateral finish, and to a process for producing said multitubular bags.

### Background of the Invention

It is known that one failure mechanism of electric lead batteries is related to the loss of active material from the positive plate and to the corrosion of the conducting support. These effects are both caused by mechanical stresses that are related to the volume changes of the active material due to the charging/discharging cycles of the elements and vibrations to which the battery is often subjected.

To prevent this phenomena, tubular positive battery plates generally comprise a plurality of cartridge-like parallel tubes made of porous woven or non-woven fabric material. Each tube contains lead dioxide as active electrode material and a spine of lead or lead alloy. The spines are all connected together at one end of the sheath by a common top bar to which a current take-off lug is connected, the other end of each tube being closed by a plug.

The tubes are commonly constituted by two porous sheets of fabric which are stitched together along a number of parallel lines and are thus initially in a flat or collapsed form. It is therefore necessary to open each tube to allow it to be filled with active material and one common method of doing so is disclosed in GB 1574722.

Patent documents US 2981783, EP 0275897 and GB2218664 are typical examples of prior art multitubular gauntlets for lead-acid batteries, with the associated production method.

A problem arising from the assembly of two flat sheets is the presence of a lateral finish at both lateral ends of the tubular bags. This represents at least two potential problems: it increases the width of the multitubular bags as well as the corresponding dead space in the final battery assembly, and it further produces a potential weak point which may induce unwanted failure. This last problem is particularly important when trying to reduce the width of the seam, as the sewing or stitching gets closer to the fabric edge.

### Summary of the Invention

The present invention is related to a multitubular gauntlet for lead-acid batteries comprising at least one sheet of fabric of a porous material seamed along parallel lines and forming a plurality of parallel tubes, wherein at least one lateral tube forming the edge of said gauntlet is free of lateral finish.

Preferred embodiments of the present invention disclose at least one or a suitable combination of the following features:
- both edges of said gauntlet are free of lateral finish;
- the sheet of fabric of porous material is a non-woven fabric;
- the sheet of fabric comprises fibres selected from the group consisting of polyester, polyolefin and glass fibre;
- the sheet of fabric comprises fibres of polyethylenterephtalate associated to bicomponent fibres of polyethylenterephtalate and polybuthylenterephtalate;
- the sheet of fabric comprises an impregnation of at least one acrylic or phenolic resin;

The present invention further discloses a process for the production of a multitubular gauntlet for lead-acid batteries comprising the following steps:
a) providing at least one sheet of fabric;
b) folding said sheet, thereby forming a first edge of the multitubular gauntlet;
c) seaming said fabric along seams parallel to the first edge, thereby forming a plurality of flat tubes parallel to the first edge;
d) thermoforming the plurality of flat tubes into the desired shape corresponding to the electrode to be used, thereby obtaining the multitubular gauntlet.

According to preferred embodiments, the production process of the multitubular gauntlet of the invention comprises at least one or a suitable combination of the following features:
- the seams (14,16) are formed by stitching, sewing or ultrasonic welding;
- both edges of the multitubular gauntlet are obtained by folding the at least one sheet of fabric, the lateral ends of the at least one fabric sheet being assembled on one of the intermediate parallel seams.

The present invention further discloses a lead-acid battery comprising a multitubular gauntlet (10) according to any one of the previous claims.

### Figures

Fig. 1 represents a typical prior art multitubular gauntlet for lead-acid batteries with a lateral finish on each edge of the gauntlet.
Fig. 2 represents a series of typical prior art lateral finishes of multitubular gauntlets.
Fig. 3 represents an example of multitubular gauntlet according to the invention before and after the thermoforming process.
Fig. 4 represents another example of a multitubular gauntlet according to the invention before and after the thermoforming process.
Fig. 5 represents a section view of a multitubular gauntlet according to the invention with the spine and the active material inserted in the tubes.

### Key

10: multitubular gauntlet
11: sheet of fabric of porous material
14: longitudinal seam
15: edge fold
16: closing seam wherein both ends of the fabric sheet are joined together
20: active mass (Typically PbO₂)

### Detailed Description of the Invention

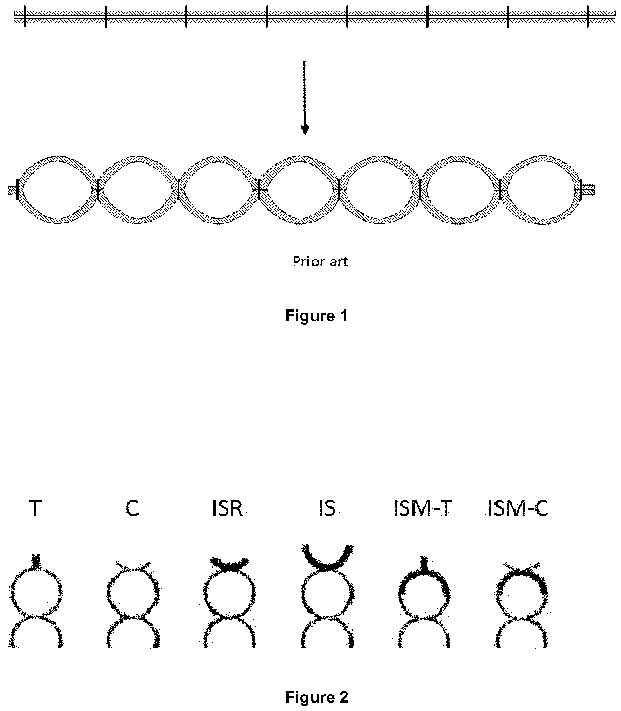

A first aspect of the invention is related to a multitubular gauntlet 10 for lead-acid batteries comprising at least one sheet of fabric 11 of porous material seamed along parallel lines (14,16) and forming a cartridge-like plurality of parallel tubes, wherein at least one lateral tube forming the edge 15 of said gauntlet is free of lateral finish. The absence of finish at the lateral edge(s) reduces the size of the gauntlet, and improved the mechanical tenacity of the lateral tube in comparison with the seamed finish of prior art gauntlets represented in fig.2. The abbreviations correspond to the geometry of the lateral finish.

The absence of lateral finish in the present invention is obtained by replacing the seam of the lateral edge tubes by a fold, so that no seam is present on at least one of the lateral edges of the multitubular gauntlet.

The mechanical strength and elasticity of the tubes should enable each single tube of the gauntlet to follow the volume variations of the active mass, from oxide to sulphate and vice versa, while continuously keeping the active mass pressed against the conductive lead-spines of the plate.

The sheet of fabric can be woven or non-woven, advantageously, the sheet of fabric of porous material is a non-woven fabric.

Suitable materials for forming the sheet of fabric are, without being limitative, for example various polyester types, polyolefins, glass fibres and mixtures thereof. Preferably, the fabric comprises polyester fibres comprising polyethylenterephtalate fibres associated to polyethylenterephtalate/ polybuthylenterephtalate bicomponent material fibres. Those materials exhibit a good mechanical behaviour and resist to acidic aggression of the electrolytic solutions, thereby avoiding contamination of the acidic solution of the battery.

In order to avoid direct contact between the acidic solution and the fibre, which can lead to material corrosion (hydrolysis of the ester bonds), the fabric is impregnated with an acrylic or a phenolic resin having a good chemical resistance to acid solutions used in batteries. The sheet of fabric is usually impregnated before being introduced in the process of the invention. The thermoforming temperature of the impregnated sheet of fabric is typically comprised between 120 and 220°C.

The material, the texture, the density of the fabric and the impregnation are selected to obtain a rigid, porous material, having high permeability to solute ions and being impermeable to active material crystallites (PbO₂). The rigidity should be sufficiently high to ease the subsequent filling of the tubes by the active material around the conductive lead spine 21. The active material can be in the form of a dry powder, or a slurry (paste).

A second aspect of the present invention is related to a method for producing multitubular gauntlet 10 without at least one lateral finish on its edge.

The process of the invention comprises the steps of:
a) providing at least one sheet of fabric 11;
b) folding said fabric 11, thereby forming a first lateral edge 15 of the multitubular gauntlet;
c) seaming said fabric 11 along seams (14,16) parallel to the first lateral edge 15, thereby forming flat tubes parallel to the first lateral edge 15, the lateral ends of the sheet of fabric being joined together at one of the parallel seams 16.

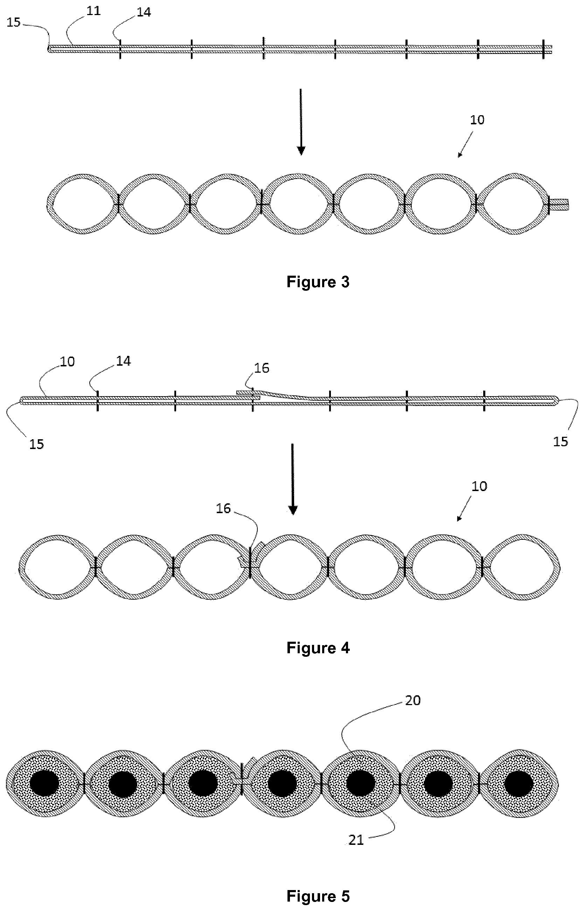

The obtained flat tubes are represented in the upper drawing of fig. 3 and fig. 4.

It is already an advantage of the invention to have one edge tube free of lateral finish, the sheet of fabric 11 is nevertheless preferably folded on both edges of the multitubular gauntlet 10, thereby forming a multitubular gauntlet completely free of lateral finish.

In order to produce tubes having the shape corresponding to the shape of the electrode intended to be used, the flat tubes are thermoformed into the desired shape. Conventional tube shapes are cylindrical, oval, elliptical, rectangular or squared, the most commonly used being cylindrical.

The thermoformed gauntlets according to the invention are represented in the drawings of fig. 3 and 4.

The seams can be produced by any suitable permanent joining method known by those skilled in the art, such as gluing, sewing, thermal bonding, RF or ultrasonic welding. Sewing and ultrasonic welding are the preferred joining methods to be used in the present invention.

## Claims

1. Multitubular gauntlet (10) for lead-acid batteries comprising at least one sheet of fabric (11) of a porous material folded on both edges and seamed along parallel lines (14,16) and forming a plurality of parallel tubes, wherein the lateral tubes form the edge (15) of said gauntlet and wherein both edges of said gauntlet are free of lateral finish.

2. Multitubular gauntlet (10) according to any one of the preceding claims wherein the sheet of fabric (11) of porous material is a non-woven fabric.

3. Multitubular gauntlet (10) according to any one of the preceding claims wherein the sheet of fabric (11) comprises fibres selected from the group consisting of polyester, polyolefin and glass fibre.

4. Multitubular gauntlet (10) according to any one of the preceding claims wherein the sheet of fabric (11) comprises fibres of polyethylenterephtalate associated to bicomponent fibres of polyethylenterephtalate and polybuthylenterephtalate.

5. Multitubular gauntlet (10) according to any one of the preceding claims wherein the sheet of fabric (11) comprises an impregnation of at least one acrylic or phenolic resin.

6. Process for the production of a multitubular gauntlet (10) for lead-acid batteries according to any one of the preceding claims comprising the following steps:
a) providing at least one sheet of fabric (11);
b) folding the at least one sheet of fabric to obtain both edges, the lateral ends of the at least one fabric sheet being assembled on one of the intermediate parallel seams;
c) seaming said fabric along seams (14,16) parallel to the first edge, thereby forming a plurality of flat tubes parallel to the first edge;
d) thermoforming the plurality of flat tubes into the desired shape corresponding to the electrode to be used, thereby obtaining the multitubular gauntlet (10).

7. Process according to claim 6 wherein the seams (14, 16) are formed by stitching, sewing or ultrasonic welding.

8. Lead-acid battery comprising a multitubular gauntlet (10) according to any one of the preceding claims.
